# EUROPEAN PATENT APPLICATION

(11) **EP 0 622 161 A1**
(43) Date of publication of application: **02.11.1994**
(21) Application number: 93921062.1
(22) Date of filing: 20.09.1993
(51) Int. Cl.: B26F 1/20, B26F 1/24, H01M 4/73, H01M 4/74

(54) **PERFORATED METAL SHEET, ITS MANUFACTURE METHOD, SUPPORTER AND PLATE OF CELL USING THE SHEET**

(30) Priority: 21.09.1992 JP 278089/92; 18.12.1992 JP 355579/92; 17.08.1993 JP 225146/93
(71) Applicant: OHARA METAL INDUSTRY CO., LTD, Shimogyo-ku Kyoto-shi Kyoto 600 (JP)
(72) Inventor: OHARA, Shinsuke Ohara Metal Industry Co., Ltd., Shimogyo-ku, Kyoto-shi Kyoto 600 (JP)
(74) Representative: Brooks, Nigel Samuel
(86) International application number: JP9301361
(87) International publication number: WO9406604

(57) **Abstract**

Metal sheet having less residual stress in its interior, a great tensile strength, a small inner resistance, and an excellent capability of supporting substances. In the metal sheet a number of holes (4) are made with punches (2) alternately in two directions and have rupture projections (5) in the punching directions. Such perforated metal sheet (6) can be manufactured preferably by passing metal sheet (3) between a pair of rotating rollers (1) which faces each other, are arranged rotatably in the directions opposite to each other, and have punches (2) on both cylindrical surfaces in such a way as to be interdigitated. The perforated metal sheet is particularly useful for the manufacture of the plates of a cell which support active material. The sheet is also useful for the manufacture of various supporters of substances such as in a preferably catalyst unit which supports a catalyst, and a preferable filtering unit which supports a filtering material.

## Description

### Technical Field of the Invention

This invention relates to a perforated metal sheet having a small residual internal stress, a high tensile strength, a low internal resistance and a high power of holding a substance, a method of manufacturing the metal sheet, a supporter for a substance and a cell plate for a battery using the metal sheet.

### Background of the invention

There is known a method which manufactures a perforated metal sheet by pressing a perforating sheet having a multiplicity of piercing punches against a sheet metal, such as of nickel, to make a multiplicity of holes at a time in it. This method has, however, the drawbacks of being likely to give a product having a large residual internal stress, and being unable to manufacture a long product continuously.

There are also known a nonwoven fabric of nickel made in sheet form by bonding fine nickel fibers together, and nickel foam in the form of a foamed sheet of nickel. They are widely used for a cell plate in an alkaline battery. These nickel material have, however, the drawbacks of having a low tensile strength and a high internal resistance, and being incapable by contraction of proper welding to lead wires, etc.

There are also known a metal sheet of lead or lead alloy having a grid pattern of holes formed by casting, and a metal sheet of lead or lead alloy having a grid pattern of holes formed by punching or expansion after slitting. They are used for a cell plate in a lead accumulators. They have, however, the drawbacks of having a high internal resistance, a small current-collecting capacity, a low tensile strength and a low power of holding an active material.

It is, therefore, an abject of this invention to provide an improved perforated metal sheet having a small residual internal stress, a high tensile strength, a low internal resistance and a high power of holding a substance, a method of manufacturing the metal sheet, a supporter for a substance and a cell plate for a battery using the metal sheet.

Other objects of this invention will appear in the following description and appended claims.

### Disclosure of the Invention

According to the invention, there is provided a perforated metal sheet which comprises a sheet metal having a multiplicity of holes made with piercing punches alternately in opposite directions from both sides of said sheet metal, each of said holes having rupture projections around it in the piercing direction. The quality and thickness of the sheet metal, and the shape, size and density of the holes depend mainly on the purpose for which is used.

The perforated metal sheet of this invention has only a small residual internal stress, since its holes are formed by piercing from both sides. It also has a high tensile strength, a low internal resistance and a high power of holding a substance owing to the alternating arrangement of the rupture projections on both sides thereof. The rupture projections serve as a kind of anchor to enable the metal sheet to hold any of various kinds of substances easily and firmly on both sides thereof.

The perforated metal sheet of this invention can, therefore, be used to form a good supporter for various kinds of substances. For example, it can be used as a good supporter for an active material to make a cell plate for a battery. If the metal sheet is of nickel, it can be used to make a sell plate for an alkaline battery, and if it is of lead or lead alloy, it can be used to make a cell plate for a lead accumulator. The sheet metal of nickel may have a thickness of, say, from 10 to 100 microns to make the former call plate, while the sheet metal of lead or lead alloy may have a thickness of, say, from 100 to 1000 microns to make the latter cell plate.

The perforated metal sheet of this invention is also useful as a supporter for a catalyst to make a good catalyzer unit, or as a supporter for a filtering material to make a good filter unit.

Such perforated metal sheet can be manufactured preferably by passing a sheet metal through between a pair of parallel rotating rollers supported rotatably in opposite directions to each other, and said rotating rollers having a multiplicity of piercing punches on their cylindrical surfaces which face each other, said piercing punches on each of said rotating rollers being arranged in a staggered relation to those on the other. The method of this invention is useful for even the continuous perforation of the long metal sheet material.

It can easily be adapted to a sheet metal having a larger width if another appropriately long roller of the same diameter having a multiplicity of appropriately arranged piercing punches is connected to each rotating roller coaxially therewith. It is alternatively possible to form each rotating roller from a plurality of unit rollers which can axially be connected or disconnected to suit the width of the sheet metal to be perforated.

### Brief Description of the Drawings

The attached drawings illustrate perforated metal sheets and a method of manufacturing the metal sheet embodying the invention.
Fig. 1(A) is a top plan view of a sheet metal of lead which is used to make cell plates for a lead accumulator, each cell plate including a perforated metal sheet embodying this invention;
Fig. 1(B) is fragmentary side elevational view of two rotating rollers, which illustrates a method of manufacturing the cell plates using the metal sheet shown in Fig. 1(A);
Fig. 2(A) is a top plan view of one of the cell plates made by the method shown in Fig. 1(B);
Fig. 2(B) is an enlarged sectional view taken along the line I-I of Fig. 2(A);
Fig. 2(C) is an enlarged sectional view taken along the line II-II of Fig. 2(A); and
Fig. 3 is a fragmentally enlarged view of the cell plate shown in Fig. 2, the cell plate carrying an active material.

### Best Mode for carrying out the Invention

The invention will now be described in further detail with reference to the drawings showing by way of example the manufacture of cell plates for a lead accumulator.

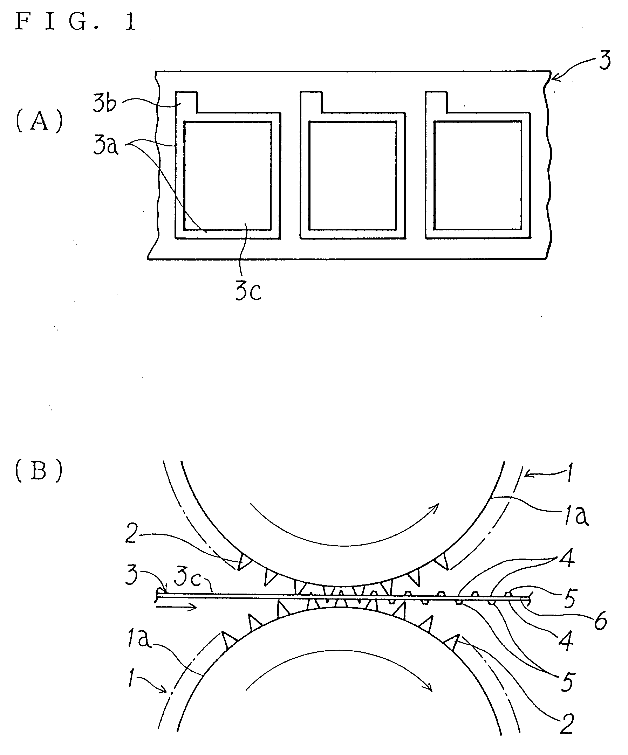

In Fig. 1, a long sheet metal 3 of lead or lead alloy having a thickness of from 100 to 1000 microns is continuously passed through between a pair of parallel rotating rollers 1 which are rotated in opposite directions to each other. Each rotating roller 1 has on its cylindrical surface 1a a multiplicity of piercing punches 2 formed in rows along its length and its circumference, and each shaped like a quadrangular pyramid. The rotating rollers 1 are so arranged that the piercing punches 2 on one of the rotating rollers 1 may have a staggered or meshing relation to those on the other rotating roller 1 when the rotating rollers 1 are rotated.

The sheet metal 3 has a plurality of roll-formed frame and lug portions 3a and 3b having a thickness of from 1 to 3 mm, and a plurality of grid portions 3c, and are going to be held under pressure between the piercing punches 2 on both rotating rollers 1. The frame, lug and grid portions 3a, 3b and 3c form the frame, current-collecting lug and grid of a cell plate for a lead accumulator, respectively,

As the sheet metal 3 is passed through between the rotating rollers 1, the piercing punches 2 pierce each grid portion 3c of the sheet metal 3 alternately from both sides thereof to form a multiplicity of square grid holes 4 each having a side length of approx. from 200 to 700 microns with a density of approx. from 200 to 400 holes per square centimeter, while leaving around each grid hole 4 in the piercing direction rupture projections 5 shaped like a hollow quadrangular pyramid and having a height of approx. from 250 to 450 microns, whereby a perforated metal sheet 6 of lead or lead alloy is obtained in each grid portion 3c of the sheet metal 3. Although the frame and lug portions 3a and 3b of the metal sheet material 3 have been described as being formed by rolling, they can alternatively be formed by e.g. extrusion or casting.

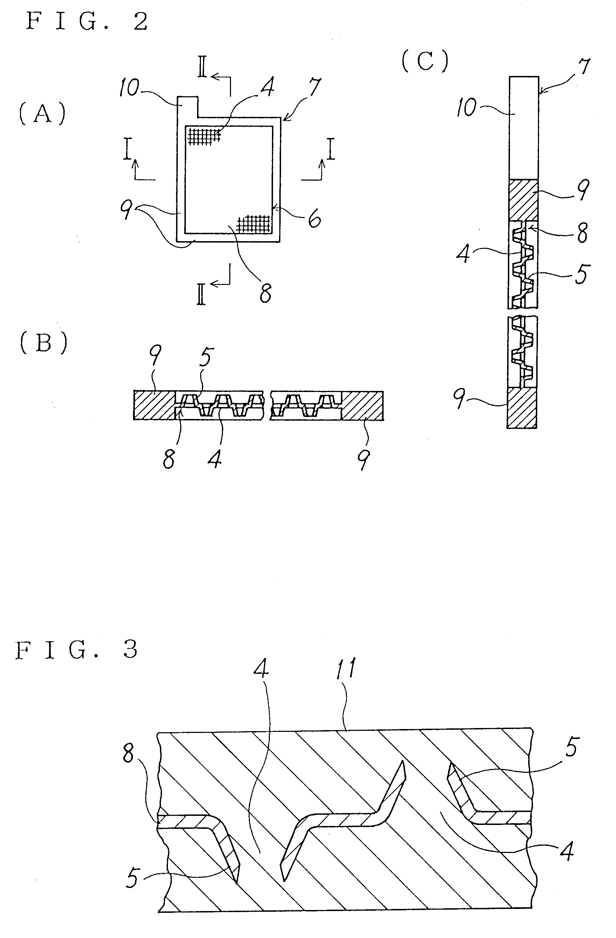

The sheet metal 3 in which each grid portion 3c has been perforated to make a perforated metal sheet 6, is cut around each set of frame and lug portions 3a and 3b to give a cell plate 7 having a prescribed size as shown in Fig. 2.

The cell plate 7 has a grid 8 having a multiplicity of grid holes 4 and rupture projections 5 around each grid hole 4, a frame 9 surrounding the grid 8 and having a larger thickness than the grid 8, and a current-collecting lug 10 projecting from the top of the frame 9 and having a larger thickness than the grid 8.

The grid 8 of the cell plate 7 is filled with an active material 11 for making an electrode as shown in Fig. 3, wherein each grid hole 4 of the grid 8 is stuffed with the active material 11.

The frame 9 and lug 10 have a thickness which is larger than the total height of the rupture projections 5 projecting from both sides of the grid 8. When a multiplicity of cell plates 7 are put together in a feeder (not shown) for filling each with the active material 11, therefore, there is no contact between the grids 8 of any two adjoining cell plates 7. Accordingly, neither the collapsing or breaking of the rupture projections 5 nor the interlocking thereof occurs that may make it difficult to deliver each cell plate 7 smoothly to a filling apparatus (not shown).

The invention has been described with reference to the preferred embodiment thereof, and it is to be understood that modifications or variations may be easily made by anybody of ordinary skill in the art without departing from the scope of this invention which is defined by the appended claims.

### Industrial Applicability of the Invention

According to the present invention, there is provided a perforated metal sheet having a small residual internal stress, a high tensile strength, a low internal resistance and a high power of holding a substance.

Therefore, the perforated metal sheet can be used as a good supporter for an active material to make a cell plate for a battery. It is also useful as a supporter for a catalyst to make a good catalyzer unit, or as a supporter for a filtering material to make a good filter unit.

## Claims

1. A perforated metal sheet which comprises a sheet metal having a multiplicity of holes made with piercing punches alternately in opposite directions from both sides of said sheet metal, each of said holes having rupture projections around it in the piercing direction.

2. A method of manufacturing a perforated metal sheet which comprises passing a sheet metal through between a pair of parallel rotating rollers supported rotatably in opposite directions to each other, and said rotating rollers having a multiplicity of piercing punches on their cylindrical surfaces which face each other, said piercing punches on each of said rotating rollers being arranged in a staggered relation to those on the other.

3. A supporter for a substance using a perforated metal sheet as claimed in claim 1, wherein said metal sheet holds said substance.

4. A cell plate for a battery using a perforated metal sheet as claimed in claim 1, wherein said metal sheet holds an active material for said battery.

5. A supporter for a substance as claimed in claim 3, used as a cell plate for a lead accumulator, wherein said metal sheet is of lead or lead alloy.
